# EUROPÄISCHE PATENTSCHRIFT

(11) **EP 2 757 545 B1**
(45) Veröffentlichungstag und Bekanntmachung des Hinweises auf die Patenterteilung: **20.03.2019**
(21) Anmeldenummer: 14152214.4
(22) Anmeldetag: 22.01.2014
(51) Int. Cl.: G09F 13/18, G02B 6/00, G08B 7/06, G09F 13/22, G09F 13/04

(54) **Hinweistafel, insbesondere für eine Notbeleuchtungsanlage**
Information display panel, in particular for an emergency lighting system
Tableau indicateur, notamment pour une installation d'éclairage de secours

(30) Priorität: 22.01.2013 AT 500442013
(43) Veröffentlichungstag der Anmeldung: 23.07.2014
(73) Patentinhaber: DIN-Dietmar Nocker Facilitymanagement GmbH, 4030 Linz (AT)
(72) Erfinder:
(74) Vertreter: Jell, Friedrich

(56) Entgegenhaltungen:
- EP-A1- 1 083 383
- EP-A2- 2 423 718
- US-A1- 2007 127 261
- US-A1- 2008 049 168
- US-B1- 8 068 707

## Beschreibung

Die Erfindung betrifft eine Hinweistafel, insbesondere für eine Notbeleuchtungsanlage, mit einer hinterleuchteten Anzeige, mit mindestens einer lichtemittierenden Diode und mit einer zur Hinterleuchtung der Anzeige vorgesehenen lichtleitenden Platte, die eine, durch einen Steg von einer ihrer Breitseiten getrennte Ausnehmung ausbildet, wobei die Ausnehmung wenigstens eine lichtemittierende Diode aufnimmt, die über eine an den Steg anschließende Ausnehmungsfläche mit der lichtleitenden Platte optisch verbunden ist, wobei der Steg die Anzeige im Bereich des Stegs wenigstens bereichsweise hinterleuchtet.

Zur Hinterleuchtung einer Anzeige ist aus dem Stand der Technik eine lichtleitende Platte bekannt (DE9417471U1), die in einer Schmalseite eine mittige Ausnehmung mit eingesetzten LED-Leuchtmitteln aufweist, um eine an ihrer Breitseite vorgesehene Anzeige zu beleuchten. Die sich zwischen der Ausnehmung und den Breitseiten der Platte ausbildenden Stege werden durch die eingesetzten Dioden jedoch verhältnismäßig ungleichmäßig beleuchtet. Dieser Nachteil wird zusätzlich durch die vergleichsweise schmale Abstrahlcharakteristik der Dioden verstärkt. Eine homogene Ausleuchtung bis zu den Kanten der Breitseite können derartige Vorrichtungen daher nicht gewährleisten, sodass diese trotz ihrer kompakten Bauform nur eingeschränkt verwendet werden können - insbesondere, wenn diese zur Beleuchtung als rahmenlose Hinweistafeln bzw. Sicherheitsbeleuchtungen mit Piktogrammen verwendet werden sollen.

Außerdem sind lichtleitende Platten zum Aufbau einer Hintergrundbeleuchtung von LCD Displays bekannt. So schlägt die EP2423718A2 vor, die zur Beleuchtung der lichtleitenden Platte vorgesehenen LED in einer Ausnehmung der Platte vorzusehen, um diese damit zu schützen. Die US2008/0049168A1 erwähnt, die optische Einkopplung der in einer Ausnehmung der lichtleitenden Platte eingesetzten LED durch Totalreflexion an den Stegen der lichtleitenden Platte zu erhöhen.

Eine Hinweistafel in Anlehnung an den Oberbegriff des Anspruchs 1 ist auch aus der EP 1083383A1 bekannt.

Die Erfindung hat sich daher die Aufgabe gestellt, eine Hinweistafel der eingangs geschilderten Art auf konstruktiv einfache Weise derart zu verbessern, dass trotz kompakter, rahmenloser Bauform für eine ausreichende und gleichmäßige Helligkeit über die gesamte Fläche der Breitseite gesorgt wird - und zwar insbesondere bis zu allen Kanten.

Die Erfindung löst die gestellte Aufgabe durch die Merkmale des Anspruchs 1.

Vergrößert sich der Querschnitt des Stegs in Richtung der Ausnehmungsfläche zumindest bereichsweise, kann eine besonders breite Eintrittsfläche für von der Platte reflektiertes Licht in den Steg und somit eine verbesserte Hinterleuchtung der Anzeige geschaffen werden - und zwar insbesondere im Bereich des Stegs. Der von der lichtleitenden Platte ausgebildete Steg kann somit auf konstruktiv einfache Weise mit einer ausreichenden Lichtmenge versorgt werden, um selbst im materialreduzierten Plattenbereich keine erkennbaren Helligkeitsunterschiede befürchtet werden müssen. Die Anzeige kann also selbst im Bereich des Stegs der Platte besonders gut ausgeleuchtet werden. Zudem kann je nach Lage des Stegs das in diesen einfallende Licht bis zur von Breit- und Schmalseite ausgebildeten Kante ausreichend geführt bzw. dorthin geleitet werden. Die stegseitige Hinterleuchtung der Anzeige kann damit verbessert werden. Somit kann eine rahmenlose Hinweistafel zur Verfügung gestellt werden, die erfindungsgemäß besonders vorteilhafte Ausleuchtungsverhältnisse aufweist. Außerdem kann durch diese Konstruktion die Verwendung einer lichtemittierenden Diode als Lichtquelle ermöglicht werden, obwohl diese eine vergleichsweise enge Abstrahlcharakteristik aufweisen. Durch die Form des lichtleitenden Stegs kann nämlich sichergestellt werden, dass zurückreflektiertes Licht der Platte selbst im Falle eines in seinem Querschnitt vergleichsweise schmalen Stegs verbessert eingefangen und sicher gelenkt wird, um damit die Platte
gleichmäßig zu erhellen. Die indirekte optische Verbindung der Diode mit dem Steg kann daher für eine ausreichend hinterleuchtete Anzeige sorgen. In anderen Worten: Da sich das Diodenlicht im Wesentlichen über einen indirekten optischen Weg in den Steg einkoppelt, kann auch eine von Dioden bekannte unerwünscht fokussierte Ausleuchtung vermieden werden. Die Konstruktionsverhältnisse können vereinfacht werden, wenn sich der Querschnitt des Stegs über den Verlauf der der Ausnehmung zugewandten Stegflanke in Richtung der Ausnehmungsfläche zumindest bereichsweise vergrößert. Zudem können damit die konstruktiven Maßnahmen zur Stegausleuchtung in der Ausnehmung vorgesehen und damit auch aus dem Sichtbereich der Hinweistafel entfernt werden. Es kann sich somit sich die Möglichkeit eröffnen, eine Hinweistafel mit einer besonderen vorteilhaft hintergrundbeleuchteten Anzeige zur Verfügung zu stellen, die rahmenlos und/oder in ihren Abmessungen klein und somit auch in ihren Herstellungskosten gering ist.

Im Allgemeinen wird erwähnt, dass es sich bei der erfindungsgemäßen Hinweistafel um beispielsweise eine Sicherheitsbeleuchtung für eine nicht näher dargestellte Notbeleuchtungsanlage handeln kann. Als Anzeige kann diese Hinweistafel ein oder mehrere Piktogramme aufweisen, die hinterleuchtet werden. Weiter wird im Allgemeinen erwähnt, dass unter Breitseite einer Platte ihre Front- und/oder Rückseite erachtet werden kann, die durch Schmalseiten voneinander beabstandet sind.

Die Konstruktionsverhältnisse einer Hinweistafel können vereinfacht werden, wenn der Steg im Querschnitt zumindest teilweise keilförmig ausgebildet ist. Durch diese Ausbildung des Stegs werden alle obenstehenden Vorteile erreicht. Zudem kann die Reflexionswirkung der Keilfläche zur Homogenisierung der Lichtverteilung im Steg verwendet werden.

Vorzugsweise ist die Diode mit dem Steg ausschließlich optisch indirekt verbunden, um beispielsweise durch direkte Diodenbeleuchtung bekannte nachteilige Fokussierungseffekte zu vermeiden. Die Hintergrundbeleuchtung der Anzeige kann damit weiter verbessert werden.

Verläuft die Ausnehmungsfläche senkrecht zur Breitseite, können die Konstruktionsbedingungen der Hinweistafel noch weiter vereinfachen.

Weist die Hinweistafel einen Reflektor auf, der an den Steg wenigstens bereichsweise anschließt, kann dies zur gleichmäßig hellen Ausleuchtung der gesamten Breitseite der Platte beitragen. Zudem kann ein Reflektor genutzt werden, von Dioden emittiertes Licht verbessert zu lenken, womit auch erreicht werden kann, dass Licht in seiner Intensität gleichmäßiger in eine lichtleitende Platte einfällt. Mithilfe eines Reflektors kann des Weiteren standfest verhindert werden, dass Licht direkt von lichtemittierenden Dioden in Steg einfällt, was den Steg unerwünscht stark ausleuchten kann. Zudem können die eingesetzten Dioden durch den Reflektor optisch in den Hintergrund treten - bzw. in gewissem Ausmaß nicht einsehbar sein. Ein mit einem Reflektor versehener Steg kann daher nicht nur für besonders vorteilhafte Beleuchtungsverhältnisse an der Anzeige sorgen, sondern auch eine kompakte und rahmenlose Bauweise der Hinweistafel erleichtern.

Konstruktive Einfachheit und hohe Standfestigkeit können sich ergeben, wenn der Reflektor mindestens eine Diode trägt. Vorteilhaft kann der Reflektor metallisch ausgebildet und mit mindestens einer Diode wärmeleitend verbundenen sein, um die Diode damit zu kühlen. So kann die Lebensdauer der Diode erhöht werden, zumal mithilfe des als Kühlkörper wirkenden Reflektors für eine gleichmäßige Temperaturverteilung gesorgt werden kann, wenn mehrere Dioden zur Hinterleuchtung der Anzeige verwendet werden.

Weist die Hinweistafel einen dem Reflektor vorstehende Platine auf, auf der mindestens eine Diode befestigt ist und die einen Anschlag zur Positionierung der Diode in der Ausnehmung ausbildet, können konstruktiv einfache Voraussetzungen zur Herstellung der Hinweistafel geschaffen werden. Des Weiteren können durch diesen Anschlag die Wartung eines Leuchtmittels bzw. von Dioden vereinfacht werden.

Eine besonders vorteilhafte Ausleuchtung einer Hinweistafel kann erreicht werden, wenn der Reflektor eine Blende zur Beschränkung der direkten Lichteinstrahlung mindestens einer Diode in den Steg ausbildet. Dazu kann vorgesehen sein, dass der Reflektor die gesamte ausnehmungsseitige Stegfläche bedeckt. Erfindungsgemäß kann dieser Vorteil in Verbindung mit dem bereits genannten Vorteil der Reflexion von Licht im Steg zu einer besonders gut und homogen ausgeleuchteten Hinweistafel führen.

Konstruktiv einfach kann der Reflektor einteilig und U-förmig ausgebildet sein und eine gegenüber seinen beiden Schenkeln zurückversetzte Aufnahme für mindestens eine Diode ausbilden. So können die Schenkel als Blend- und/oder Sichtschutz für die im Reflektor verdeckt angeordnete Diode bzw. Dioden wirken.

Wärmedehnungseffekte können auf einfache Weise kompensiert werden, indem der Reflektor von der Ausnehmungsfläche beabstandet angeordnet ist. So steht dem Reflektor in Richtung des Bodens der Ausnehmung eine Möglichkeit zur thermischen Ausdehnung zur Verfügung, was die Standfestigkeit der Hinweistafel erhöhen kann.

Eine einfache Zugänglichkeit zu den Dioden kann geschaffen werden, wenn die Ausnehmung in einer Schmalseite der lichtleitenden Platte vorgesehen ist. Zudem kann mit solch einer Konstruktion eine gleichmäßige Ausleuchtung bis zum Rand der lichtleitenden Platte ergeben. Insbesondere deren mittige Anordnung kann für eine gleichmäßige Helligkeitsverteilung auf der Breitseite/den Breiseiten der lichtleitenden Platte sorgen.

Die Konstruktionsverhältnisse zur Hinterleuchtung von Anzeigen über beide Breitseiten einer lichtleitenden Platte können vereinfacht werden, indem die Ausnehmung durch je einen Steg von der jeweiligen Breitseite getrennt ist und der Reflektor an beide Stege wenigstens bereichsweise anschließt.

Die Ausnehmung kann unter Erreichung vorgenannter Vorteile auch in einer der Breitseiten der lichtleitenden Platte vorgesehen sein, um Licht der Diode in die lichtleitende Platte einzukoppeln.

Eine Auskopplung von Licht über den Steg hinaus kann auf konstruktiv einfache Weise verhindert werden, wenn das schmale Ende des Stegs eine lichtreflektierende Schicht aufweist.

Weist wenigstens eine Breitseite der lichtleitenden Platte zumindest auf Höhe des Stegs eine streuende Oberflächenkontur auf, kann die Lichtabstrahlung der Platte gezielt verändert und eingestellt werden, um damit eventuelle Helligkeitsunterschiede weiter auszugleichen. Eine besonders gleichmäßige Hinterleuchtung der Anzeige der erfindungsgemäßen Hinweistafel kann so sichergestellt werden.

Ist wenigstens eine Breitseite der lichtleitenden Platte mit einer die Anzeige aufweisenden lichtdurchlässigen Anzeigeplatte bündig abgedeckt, kann der Steg zum Tragen der Anzeige vergleichsweise schlank ausgeführt werden, da die mechanischen Belastungen auf einen Steg verringert werden können. Ein derartiger Schutz der lichtleitenden Platte kann erfindungsgemäß zur Ausbildung einer schlanken Hinweistafel genutzt werden und in weiterer Folge zu einer kompakten Bauweise der Hinweistafel führen. Diese kompakte Bauweise kann auch erreicht werden, wenn wenigstens eine Breitseite der lichtleitenden Platte mit der Anzeige bündig abgedeckt ist.

In den Figuren ist beispielsweise der Erfindungsgegenstand anhand mehrerer Ausführungsbeispiele näher dargestellt. Es zeigen
- Fig. 1.: eine teilweise aufgerissene Ansicht auf eine Breitseite einer Hinweistafel nach einem ersten Ausführungsbeispiel,
- Fig. 2: eine Draufsicht auf eine Schmalseite der Hinweistafel nach Fig. 1,
- Fig. 3: eine abgerissene und vergrößerte Schnittansicht nach III-III der Fig. 1,
- Fig. 4: eine Ansicht auf die rückseitige Breitseite einer weiteren Hinweistafel nach einem zweiten Ausführungsbeispiel und

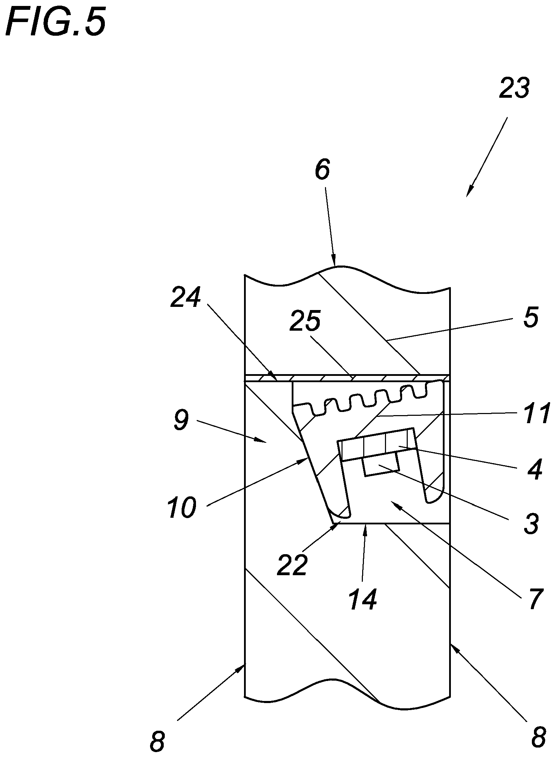

- Fig. 5: eine abgerissene und vergrößerte Schnittansicht nach V-V der Fig. 4.

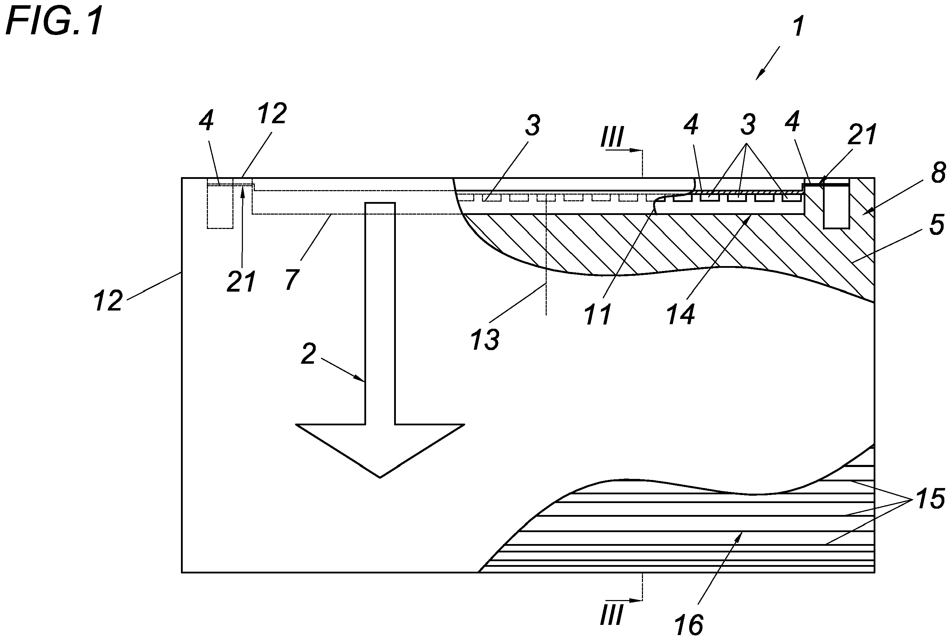

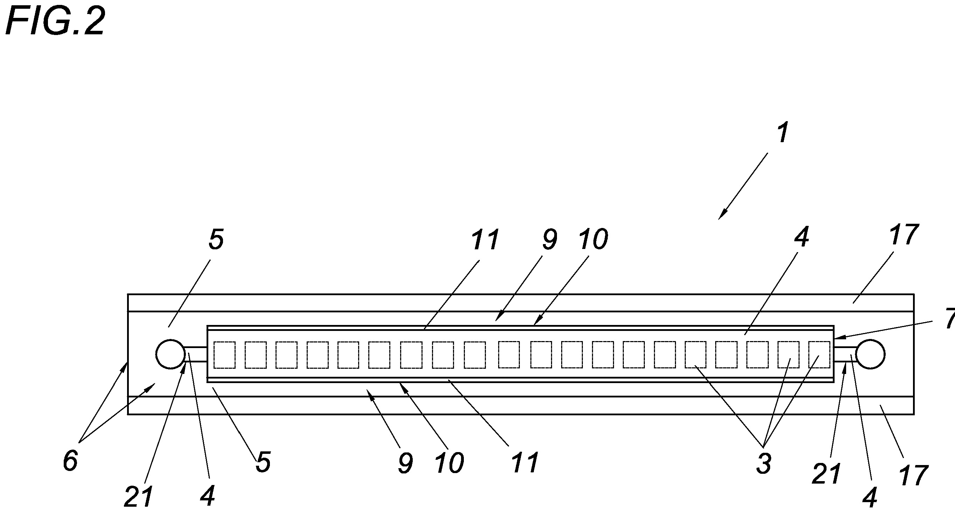

Die nach Fig. 1 beispielsweise nach einem ersten Ausführungsbeispiel dargestellte Hinweistafel 1 ist Teil einer nicht näher dargestellten Sicherheitsbeleuchtung und trägt als Anzeige 2 beispielsweise ein grünes Piktogramm mit einem Pfeil. Die Anzeige 2 ist im Hintergrund beleuchtet, wofür lichtemittierende Dioden 3 (LEDs) vorgesehen sind. Die Dioden 3 können auch mit einem nicht näher dargestellten Gehäuse und/oder mit einer nicht näher dargestellten Linse versehen sein. Alle Dioden 3 sind auf einer Platine 4 befestigt und über diese Platine 4 elektrisch verbunden. Die Dioden 3 dienen zur Erhellung einer lichtleitenden Platte 5, insbesondere zur Hinterleuchtung der Anzeige 2 über die Breitseite 8 der Platte 5. Für eine vorteilhafte Einkopplung von Licht weist die Platte 5 an ihrer oberen Schmalseite 6 eine Ausnehmung 7 auf. In diese Ausnehmung 7 sind die Dioden 3 eingesetzt. Die Ausnehmung 7 ist in der Platte 5 an ihrer oberen Schmalseite 6 mittig vorgesehen, sodass die Ausnehmung 7 beidseitig durch jeweils einen Steg 9 von den Breitseiten 8 der Platte 5 getrennt ist. Wie insbesondere der Fig. 2 zu entnehmen, weist die Platte 5 nun in den Bereichen der Stege 9 verminderte Materialstärken auf, was eine homogen helle Ausleuchtung der Breitseite 8 bzw. der im Bereich des Stegs 9 vorgesehenen Anzeige 2 erschwert.

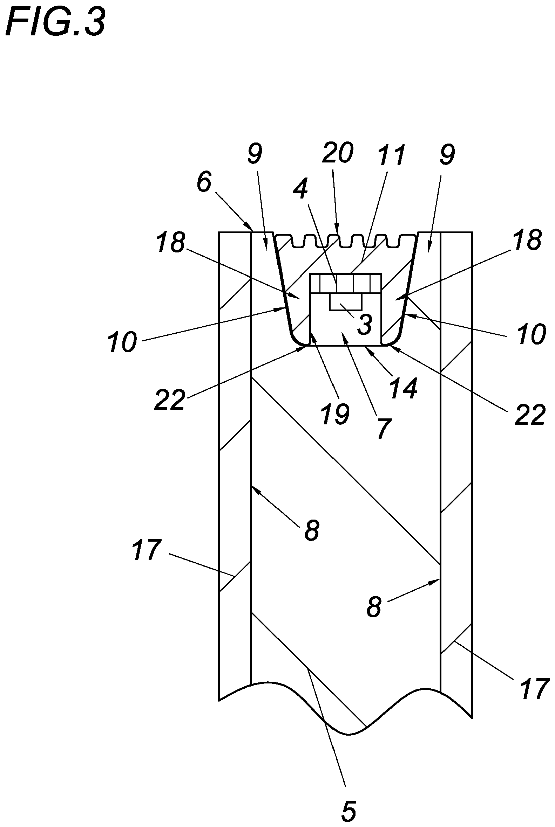

Um dennoch eine homogene und helle Ausleuchtung der Breitseite 8 zu schaffen, vergrößert sich der Querschnitt des Stegs 9 in Richtung der Ausnehmungsfläche 14 zumindest bereichsweise. Dabei sind die Dioden 3 über die Ausnehmungsfläche 14 mit der lichtleitenden Platte 5 optisch verbunden, wie dies im Detail der Fig. 3 entnommen werden kann. Durch diese Form des Stegs 9 wird die Anzeige 2 in diesem Bereich im Wesentlichen mit indirektem Diodenlicht beleuchtet, indem sich zunächst direkt über die Ausnehmungsfläche 14 in die Platte 5 eingekoppeltes Diodenlicht durch Reflexion im Steg zur Hintergrundbeleuchtung sammelt. Eine unerwünschte direkte Einkopplung von Diodenlicht in den Steg 9 kann daher unterbleiben, was einer gleichmäßigen Hintergrundbeleuchtung der Anzeige 2 förderlich ist. Erfindungsgemäß kann daher die gesamte Breiteseite 8 der Platte 5 bedenkenlos - aufgrund gleichmäßiger und allem auch vollflächiger - Ausleuchtung mit der damit im Hintergrund zu beleuchteten Anzeige 2 versehen werden.

Konstruktiv einfach wird die Stegform ausgebildet, indem sich der Querschnitt des Stegs 9 über den Verlauf der der Ausnehmung 7 zugewandten Stegflanke 10 in Richtung der Ausnehmungsfläche 14 stetig vergrößert. Diese Maßnahme kann die Breitseite 8 frei von diesbezüglichen Konstruktionsmerkmalen halten und damit beispielsweise Planheit garantieren.

Zudem ist - diese Vorteile ergänzend - an den der Ausnehmung 7 zugewandten Stegflanken 10 der Stege 9 je ein Reflektor 11 vorgesehen. Die Reflektoren 11 schließen an den Steg 9 an, womit durch die Stege 9 ein in der Führung von Licht definierbarer Lichtleiter geschaffen wird, der sich beidseitig der Ausnehmung 7 erstreckt und selbst in diesen materialverminderten Bereichen der Platte 5 die Helligkeit der Hinterleuchtung an die anderen Plattenbereiche verbessert angleicht. Da nun eine Anzeige 2 bis zu den Kanten 12 der Breitseite 8 gleichmäßig ausgeleuchtet werden kann, ist auch ein Rahmen im Bereich der Dioden 3 nicht mehr erforderlich. Die dargestellte erfindungsgemäße Hinweistafel 1 ermöglicht daher eine kompakte und konstruktiv einfache Ausführung.

Als Reflektor 11 ist beispielsweise ein Spiegel, eine spiegelnde Folie oder eine auf den Steg 9 aufgedampfte Spiegelschicht vorstellbar. Beispielsweise kann hierfür ein metallischer Körper verwendet werden, der im thermischen Verbund mit den Dioden 3 auch zu deren Kühlung beitragen kann.

Konstruktiv einfach weisen die Stege 9 im Querschnitt eine Keilform auf und verläuft die Ausnehmungsfläche 14, über die die Dioden 3 mit der lichtleitenden Platte 5 optisch verbunden sind, senkrecht zur Breitseite 8.

Nach Fig. 1 ist zu erkennen, dass die Hauptachse 13 der Abstrahlung der Dioden 3 parallel zur Breitseite 8 der Platte 5 verläuft. Um eine direkte Lichteinstrahlung in die Stege 9 durch eine eventuelle Nebenabstrahlung der Dioden 3 weitgehend zu unterbinden, bildet der Reflektor 11 eine Blende aus. Zu diesem Zweck ragt der Reflektor 11 deutlich tiefer in die Ausnehmung 7, als dies bei den Dioden 3 der Fall ist. Eventuelle Fokussierungspunkte der Dioden 3 im Bereich der Stege 9 sind dadurch auf konstruktiv einfache Weise zu verhindern.

Die konstruktive Ausgestaltung der dem Reflektor 11 vorstehenden Platine 4 wird genutzt, indem diese einen Anschlag 21 zur Positionierung der Dioden 3 bzw. des Kühlkörpers in der Ausnehmung 7 aufweist. Der mit der Platine 4 verbundene Reflektor 11 kann so die Lage der Dioden 3 an der Schmalseite 6 der Platte 5 positionsgenau festlegen. Dieser so fix eingestellte Abstand der Dioden 3 zum den Boden bildenden Ausnehmungsfläche 14 führt zu konstanten Beleuchtungsverhältnissen bei gleichmäßig heller Ausleuchtung der Anzeige 2.

Die Breitseiten 8 der lichtleitenden Platte 5 weisen Rillen 15 auf, um damit der Platte 5 eine streuende Oberflächenkontur 16 zu geben. Eine andere Geometrie bzw. Struktur zur Ausbildung einer Oberflächenkontur 16 ist vorstellbar, was jedoch nicht näher dargestellt worden ist. Auf diese Weise können Helligkeitsunterschiede weiter ausgeglichen werden. Solch eine streuende Oberflächenkontur 16 ist auch im Bereich der Stege 9 vorstellbar. Anstatt oder zusätzlich zu Rillen 15 ist es auch vorstellbar, die Platte 5 mit anders geformten Oberflächenkonturen zu versehen.

An den Breitseiten 8 der Platte 5 sind jeweils Anzeigeplatten 17 vorgesehen, die durch die Platte 5 hintergrundbeleuchtet werden. Die Anzeigeplatten 17 decken die lichtleitende Platte 5 bündig ab und schaffen so eine besonders schlanke, rahmenlose Hinweistafel 1, in der die Platte 5 vor Beschädigungen geschützt werden kann.

Nach Fig. 3 ist der Reflektor 11 U-förmig geformt. Der in die mittige Ausnehmung 7 eingesetzte Reflektor 11 ist als einteiliger Kühlkörper mit obenliegenden Kühlrippen 20 ausgebildet. Die Schenkel 18 des Reflektors 11 liegen an den Stegflanken 10 der lichtleitenden Platte 5 an. Zudem bildet der Reflektor 11 eine gegenüber seinen beiden Schenkeln 18 zurückversetzte Aufnahme 19 für die Dioden 3 aus. Die auf der Platine 4 vorgesehenen Dioden 3 können so im Reflektor 11 versenkt vorgesehen werden. Somit ist eine wärmeleitende Verbindung sichergestellt, womit der Reflektor 11 als kühlender Träger der Dioden 3 bzw. der Platine 4 der Dioden 3 aber auch als Abschirmung der Dioden vor deren direkten Einsehbarkeit dienen kann. Eine konstruktiv besonders einfache Hinweistafel 1 ist sohin geschaffen.

Zudem ist der Fig. 3 zu entnehmen, dass sich der Steg 9 der Schmalseite 6 zulaufend verjüngt, was zu Ausnehmung 7 mit V-förmig zulaufenden Stegflanken 10 führt. Damit kann der Boden 14 der Ausnehmung 7 klein gehalten und eine verbesserte Lichtkopplung in den beiden Stegen 9 erreicht werden. Die Ausgestaltung beider Stege 9 kann beispielsweise in die Platte 5 gefräst werden.

Des Weiteren ist auch der Fig. 3 zu entnehmen, dass der Reflektor 11 von der Ausnehmungsfläche 14 beabstandet angeordnet ist. Dieser Abstand 22 dient insbesondere in Hinblick auf mögliche Wärmedehnungseffekte.

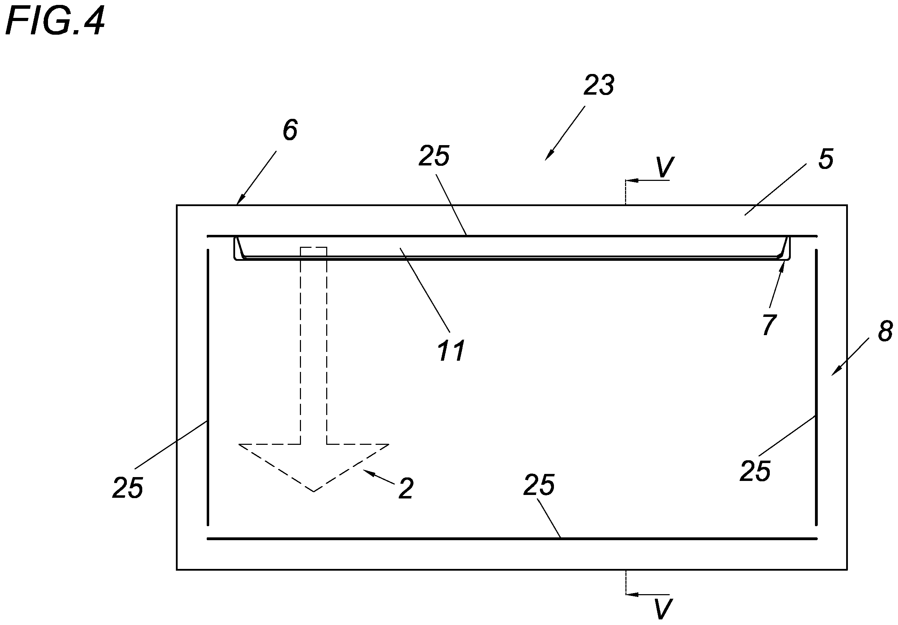

Die nach Fig. 4 dargestellte Hinweistafel 23 weist die Ausnehmung 7 - zum Unterschied zur nach Fig. 3 dargestellten - auf einer Breitseite 8 der lichtleitenden Platte 5 auf. Es bildet sich daher ausschließlich ein Steg 9 zwischen der Ausnehmung 7 und einer Breitseite 8 aus, auf welcher auch die in die Ausnehmung 7 vorragende Anzeige 2 aufgebracht ist.

Die Stegflanke 10 verläuft zunächst parallel zur Breitseite 8, vergrößert jedoch danach ihren Querschnitt stetig in Richtung der Ausnehmungsfläche 14. Auch hier vergrößert sich der Querschnitt des Stegs 9 über den Verlauf der der Ausnehmung 7 zugewandten Stegflanke 10 in Richtung der Ausnehmungsfläche 14. So wird ein Flaschenhals in der optischen Anbindung des Stegs vermieden. Auf diese Weise kann eine ausreichende Menge Licht der Dioden 3 über die Ausnehmungsfläche 14 in die lichtleitende Platte 5 eingekoppelt werden und dem Steg 9 zu dessen homogenen Ausleuchtung indirekt zugeführt werden. Der Reflektor 11 ist zudem gegenüber der Ausnehmungsfläche 14 verschwenkt in der Ausnehmung 7 positioniert, um bündig mit der lichtleitenden Platte 5 abschließen zu können.

Das schmale Ende 24 des Stegs 9 weist zudem eine lichtreflektierende Schicht 25 auf, wobei - wie in Fig. 6 dargestellt - zudem weitere lichtreflektierende Schichten 25 in die lichtleitende Platte 5 eingebracht sind, um einen Lichtkäfig zu schaffen.

## Patentansprüche

1. Hinweistafel, insbesondere für eine Notbeleuchtungsanlage, mit einer hinterleuchteten Anzeige (2), mit mindestens einer lichtemittierenden Diode (3) und mit einer zur Hinterleuchtung der Anzeige (2) vorgesehenen lichtleitenden Platte (5), die eine, durch einen Steg (9) der Platte (5) von einer ihrer Breitseiten (8) getrennte Ausnehmung (7) ausbildet, wobei die Ausnehmung (7) wenigstens eine lichtemittierende Diode (3) aufnimmt, die über eine an den Steg (9) anschließende Ausnehmungsfläche (14) mit der lichtleitenden Platte (5) optisch verbunden ist, wobei der Steg (9) die Anzeige (2) im Bereich des Stegs (9) wenigstens bereichsweise hinterleuchtet, **dadurch gekennzeichnet, dass** sich zur verbesserten Hinterleuchtung der Anzeige (2) in diesem Bereich des Stegs (9) der Querschnitt des Stegs (9), insbesondere über den Verlauf der, der Ausnehmung (7) zugewandten Stegflanke (10), in Richtung der Ausnehmungsfläche (14) zumindest bereichsweise vergrößert.

2. Hinweistafel nach Anspruch 1, **dadurch gekennzeichnet, dass** der Steg (9) im Querschnitt zumindest teilweise keilförmig ausgebildet ist.

3. Hinweistafel nach Anspruch 1 oder 2, **dadurch gekennzeichnet, dass** die Diode (3) mit dem Steg (9) ausschließlich optisch indirekt verbunden ist.

4. Hinweistafel nach einem der Anspruch 1, 2 oder 3, **dadurch gekennzeichnet, dass** die Hinweistafel (1, 23) einen Reflektor (11) aufweist, der an den Steg (9) wenigstens bereichsweise anschließt.

5. Hinweistafel nach Anspruch 4, **dadurch gekennzeichnet, dass** der insbesondere metallische Reflektor (11) mindestens eine Diode (3) trägt und zu deren Kühlung mit dieser wärmeleitend verbundenen ist.

6. Hinweistafel nach Anspruch 4 oder 5, **dadurch gekennzeichnet, dass** die Hinweistafel (1, 23) eine dem Reflektor (11) vorstehende Platine (4) aufweist, auf der mindestens eine Diode (3) befestigt ist und die einen Anschlag (21) zur Positionierung der Diode (3) in der Ausnehmung (7) ausbildet.

7. Hinweistafel nach Anspruch 4, 5 oder 6, **dadurch gekennzeichnet, dass** der Reflektor (11) eine Blende zur Beschränkung der direkten Lichteinstrahlung mindestens einer Diode (3) in den Steg (9) ausbildet.

8. Hinweistafel nach einem der Ansprüche 4 bis 7, **dadurch gekennzeichnet, dass** der Reflektor (11) einteilig und U-förmig ausgebildet ist und eine gegenüber seinen beiden Schenkeln (18) zurückversetzte Aufnahme (19) für mindestens eine Diode (3) ausbildet.

9. Hinweistafel nach einem der Ansprüche 4 bis 8, **dadurch gekennzeichnet, dass** der Reflektor (11) von der Ausnehmungsfläche (14) beabstandet angeordnet ist.

10. Hinweistafel nach einem der Ansprüche 1 bis 9, **dadurch gekennzeichnet**, die Ausnehmung (7) in einer Schmalseite (6) der lichtleitenden Platte (5), insbesondere mittig, vorgesehen ist.

11. Hinweistafel nach Anspruch 10, **dadurch gekennzeichnet, dass** die Ausnehmung (7) durch je einen Steg (9) von der jeweiligen Breitseite (8) getrennt ist und dass der Reflektor (11) an beide Stege (9) wenigstens bereichsweise anschließt.

12. Hinweistafel nach einem der Ansprüche 1 bis 9, **dadurch gekennzeichnet**, die Ausnehmung (7) in einer der Breitseiten (8) der lichtleitenden Platte (5) vorgesehen ist.

13. Hinweistafel nach Anspruch 12, **dadurch gekennzeichnet, dass** das schmale Ende (24) des Stegs (9) eine lichtreflektierende Schicht (25) aufweist.

14. Hinweistafel nach einem der Ansprüche 1 bis 13, **dadurch gekennzeichnet, dass** wenigstens eine Breitseite (8) der lichtleitenden Platte (3) zumindest auf Höhe des Stegs (9) eine streuende Oberflächenkontur (16) aufweist.

15. Hinweistafel nach einem der Ansprüche 1 bis 14, **dadurch gekennzeichnet, dass** wenigstens eine Breitseite (8) der lichtleitenden Platte (3) mit der Anzeige (2), insbesondere mit einer die Anzeige (2) aufweisenden lichtdurchlässigen Anzeigeplatte (17), bündig abgedeckt ist.

## Claims

1. Notice board, more particularly for an emergency lighting installation, having a backlit display (2), having at least one light-emitting diode (3) and having a light-conducting plate (5) which is provided for backlighting the display (2) and forms a recess (7) which is separated from one of its broad sides (8) by a web (9), wherein the recess (7) accommodates at least one light-emitting diode (3), which is optically connected to the light-conducting plate (5) via a recess surface (14) adjoining the web (9), wherein the web (9) backlights the display (2) in the region of the web (9) at least in sections, **characterized in that** for improved backlighting of the display (2) in this region of the web (9), the cross-section of the web (9), more particularly over the course of the web flank (10) facing the recess (7), increases at least in sections in the direction of the recess surface (14).

2. Notice board according to claim 1, **characterized in that** the web (9) is at least partially wedge-shaped in cross-section.

3. Notice board according to claim 1 or 2, **characterized in that** the diode (3) is connected to the web (9) in an exclusively optically indirect manner.

4. Notice board according to one of claim 1, 2 or 3, **characterized in that** the notice board (1, 23) has a reflector (11) which adjoins the web (9) at least in sections.

5. Notice board according to claim 4, **characterized in that** the especially metallic reflector (11) carries at least one diode (3) and is thermally conductively connected thereto for cooling thereof.

6. Notice board according to claim 4 or 5, **characterized in that** the notice board (1, 23) has a circuit board (4) which projects beyond the reflector (11) and on which at least one diode (3) is fastened and which forms a stop (21) for positioning the diode (3) in the recess (7).

7. Notice board according to claim 4, 5 or 6, **characterized in that** the reflector (11) forms an aperture for limiting the direct light irradiation of at least one diode (3) into the web (9).

8. Notice board according to one of claims 4 to 7, **characterized in that** the reflector (11) is of integral and U-shaped design and forms a receptacle (19) for at least one diode (3) which is set back relative to its two limbs (18).

9. Notice board according to one of claims 4 to 8, **characterized in that** the reflector (11) is arranged at a distance from the recess surface (14).

10. Notice board according to one of claims 1 to 9, **characterized in that** the recess (7) is provided in a narrow side (6) of the light-conducting plate (5), in particular centrally.

11. Notice board according to claim 10, **characterized in that** the recess (7) is separated from the respective broad side (8) by one web (9) each and that the reflector (11) adjoins both webs (9) at least in sections.

12. Notice board according to one of claims 1 to 9, **characterized in that** the recess (7) is provided in one of the broad sides (8) of the light-conducting plate (5).

13. Notice board according to claim 12, **characterized in that** the narrow end (24) of the web (9) has a light-reflecting layer (25).

14. Notice board according to one of claims 1 to 13, **characterized in that** at least one broad side (8) of the light-conducting plate (3) has a scattering surface contour (16) at least at the level of the web (9).

15. Notice board according to one of claims 1 to 14, **characterized in that** at least one broad side (8) of the light-conducting plate (3) is covered flush with the display (2), in particular with a translucent display plate (17) having the display (2).

## Revendications

1. Panneau d'information, en particulier pour une installation d'éclairage de secours, comportant un affichage rétroéclairé (2), au moins une diode électroluminescente (3) et une plaque conductrice de lumière (5) prévue pour rétroéclairer l'affichage (2) et formant un évidement (7) qui est séparé d'un de ses grands côtés (8) par une nervure (9), lequel évidement (7) reçoit au moins une diode électroluminescente (3) qui est reliée optiquement à la plaque conductrice de lumière (5) par une surface d'évidement (14) adjacente à la nervure (9), la nervure (9) rétroéclairant l'affichage (2) au moins dans certaines zones, **caractérisé en ce que**, pour un meilleur rétroéclairage de l'affichage (2) dans cette zone de la nervure (9), la section transversale de la nervure (9) augmente en direction de la surface d'évidement (14) au moins dans certaines zones, en particulier par le tracé du flanc de nervure (10) tourné vers l'évidement (7).

2. Panneau d'information selon la revendication 1, **caractérisé en ce que** la section transversale de la nervure (9) est réalisée au moins partiellement en forme de coin.

3. Panneau d'information selon la revendication 1 ou 2, **caractérisé en ce que** la diode (3) est reliée indirectement à la nervure (9) exclusivement optiquement.

4. Panneau d'information selon l'une des revendications 1, 2 ou 3, **caractérisé en ce que** le panneau d'information (1, 23) présente un réflecteur (11) qui est relié à la nervure (9) au moins dans certaines zones.

5. Panneau d'information selon la revendication 4, **caractérisé en ce que** le réflecteur (11), en particulier métallique, porte au moins une diode (3) et est relié à celle-ci de manière thermoconductrice pour la refroidir.

6. Panneau d'information selon la revendication 4 ou 5, **caractérisé en ce que** le panneau d'information (1, 23) présente une plaque de circuit imprimé (4) qui dépasse du réflecteur (11), sur laquelle est fixée au moins une diode (3) et qui forme une butée (21) pour positionner la diode (3) dans l'évidement (7).

7. Panneau d'information selon la revendication 4, 5 ou 6, **caractérisé en ce que** le réflecteur (11) forme un écran pour limiter le rayonnement lumineux direct d'au moins une diode (3) dans la nervure (9).

8. Panneau d'information selon l'une des revendications 4 à 7, **caractérisé en ce que** le réflecteur (11) est réalisé d'une seule pièce et en forme de U et forme un logement (19) en retrait par rapport à ses deux branches (18) pour au moins une diode (3).

9. Panneau d'information selon l'une des revendications 4 à 8, **caractérisé en ce que** le réflecteur (11) est disposé à distance de la surface d'évidement (14).

10. Panneau d'information selon l'une des revendications 1 à 9, **caractérisé en ce que** l'évidement (7) est prévu dans un petit côté (6) de la plaque conductrice de lumière (5), en particulier au centre.

11. Panneau d'information selon la revendication 10, **caractérisé en ce que** l'évidement (7) est séparé du grand côté respectif (8) par une nervure respective (9) et que le réflecteur (11) est adjacent aux deux nervures (9) au moins dans certaines zones.

12. Panneau d'information selon l'une des revendications 1 à 9, **caractérisé en ce que** l'évidement (7) est prévu dans l'un des grands côtés (8) de la plaque conductrice de lumière (5).

13. Panneau d'information selon la revendication 12, **caractérisé en ce que** l'extrémité étroite (24) de la nervure (9) présente une couche réfléchissant la lumière (25).

14. Panneau d'information selon l'une des revendications 1 à 13, **caractérisé en ce qu'**au moins un grand côté (8) de la plaque conductrice de lumière (3) présente un contour de surface diffusant (16) au moins au niveau de la nervure (9).

15. Panneau d'information selon l'une des revendications 1 à 14, **caractérisé en ce qu'**au moins un grand côté (8) de la plaque conductrice de lumière (3) est recouvert en affleurement par l'affichage (2), en particulier par une plaque d'affichage translucide (17) qui présente l'affichage (2).
